# EUROPÄISCHE PATENTANMELDUNG

(11) **EP 2 048 367 A1**
(43) Veröffentlichungstag der Anmeldung: **15.04.2009**
(21) Anmeldenummer: 07019738.9
(22) Anmeldetag: 09.10.2007
(51) Int. Cl.: F04D 29/12, F01D 25/14, F16J 15/34

(54) **Gehäuse mit Kühleinrichtung für einen Prozessgasturboverdichter**

(71) Anmelder: SIEMENS AKTIENGESELLSCHAFT, 80333 München (DE)
(72) Erfinder: Fingerhut, Udo, 47443 Moers (DE); Zacharias, Wolfgang, 47198 Duisburg (DE)

(57) **Zusammenfassung**

Ein Gehäuse (1) für einen Prozessgasturboverdichter weist einen Einbauraum (4) für eine gasgeschmierte Gleitringdichtung, die mit dem Prozessgas als ein Sperrgas betreibbar ist, und eine Kühleinrichtung (5-14) zum Kühlen des Einbauraums (4) auf, so dass im Betrieb des Prozessgasturboverdichters die Verlustleistung der Gleitringdichtung abgeführt werden kann und die Leckagerate niedrig ist. Der Prozessgas-Hochdruckturboverdichter weist das Gehäuse (1) auf. Die Kühleinrichtung (5-14) weist eine Steuereinheit auf, mit der das Kühlen des Einbauraums (4) der Gleitringdichtung in Abhängigkeit eines zeitlichen Temperaturgradienten und/oder eines Kondensatanfalls in dem Sperrgas steuerbar ist.

## Beschreibung

Die Erfindung betrifft ein Gehäuse für einen Prozessgasturboverdichter und den Prozessgasturboverdichter mit dem Gehäuse.

Ein Turboverdichter weist ein Gehäuse und einen Rotor auf, der von dem Gehäuse umgeben ist. Der Rotor weist eine Welle und mindestens ein Laufrad auf, das auf der Welle aufgefädelt ist. Die Welle ist an ihren Längsendbereichen an dem Gehäuse mittels Lager abgestützt. Herkömmlich sind die Lager in atmosphärischen Bedingungen angesiedelt.

Der Turboverdichter ist beispielsweise in einer Anlage der petrochemischen Industrie oder der Ölindustrie zum Verdichten von Prozessgas eingesetzt. Das Prozessgas hat einen hohen Druck und/oder eine hohe Dichte. Das Innere des Turboverdichters ist an der Welle zu den Lagern hin gegen das Gehäuse mittels einer Wellendichtung abgedichtet. Die Wellendichtung ist beispielsweise ausgeführt als eine gasgeschmierte Gleitringdichtung.

Die gasgeschmierte Gleitringdichtung weist einen oder zwei Rotorringe, die mit der Welle befestigt sind und somit mit der Welle rotieren, und einen oder zwei Statorringe auf, die mit dem Gehäuse befestigt sind und somit stationär sind. Dadurch ergibt sich bei Rotation des Rotors eine Relativbewegung zwischen dem Rotorring und dem Statorring. Der Rotorring und der Statorring sind um einen Längsendbereich der Welle herum und in Längsrichtung der Welle jeweils hintereinander liegend angeordnet, wobei der Innendurchmesser des Rotorrings im Wesentlichen der des Statorrings ist und der Außendurchmesser des Rotorrings im wesentlich der des Statorrings ist. Sowohl der Rotorring als auch der Statorring sind an den einander zugewandten Seiten jeweils mit einem flächigen Abschnitt ausgebildet, so dass die flächigen Abschnitte einander zugewandt parallel angeordnet sind. Die beiden flächigen Abschnitte sind im Abstand voneinander angeordnet, so dass sich zwischen dem Rotorring und dem Statorring ein Spalt mit einem Gaspolster ausbildet. Somit ist bei der Relativbewegung zwischen dem Rotorring und dem Statorring eine Berührung der Ringe und ein Aneinanderschleifen unterbunden. Der Spalt zwischen dem Rotorring und dem Statorring ist von Gas durchströmt, das über den Spalt den Druck zur Atmosphäre abbaut. An den flächigen Abschnitten bildet sich in der Sperrgasströmung im Spalt eine Druckverteilung aus, die die beiden Ringe im Betrieb des Turboverdichters auseinanderdrückt, so dass der Spalt zwischen dem Rotorring und dem Statorring gewahrt bleibt.

Die Breite des Spalts bestimmt die Leckagerate der gasgeschmierten Gleitringdichtung. D.h., je größer die Breite des Spalts ist, desto höher ist die Leckagerate der gasgeschmierten Gleitringdichtung.

Da der Rotorring zu dem Statorring die Relativbewegung bei Rotation der Welle ausführt, wird in dem Sperrgas in dem Spalt eine Scherströmung erzeugt. Dadurch erwärmt sich aufgrund von Reibungseffekten in dem Sperrgas dasselbe in dem Spalt und an den rotierenden Oberflächen. Je geringer die Breite des Spalts ist, desto höher sind die Reibungseffekte, so dass bei einer geringen Breite des Spalts je nach Gaseigenschaft das Sperrgas stark erwärmt werden kann.

Eine Obergrenze einer maximal zulässigen Betriebstemperatur des Sperrgases ist konstruktiv durch die Materialen der gasgeschmierten Gleitringdichtung vorgegeben.

Je höher die Dichte des Sperrgases in dem Spalt zwischen dem Rotorring und dem Statorring und den rotierenden Oberflächen ist, desto stärker sind die Reibungseffekte. Somit erwärmt sich das Sperrgas mit hoher Dichte in dem Spalt stärker als das Sperrgas mit geringer Dichte.

Die Drehzahl des Rotors ist herkömmlich konstruktiv und von den an dem Turboverdichter vorgegebenen Rahmenbedingungen bestimmt, wie z.B. der chemischen Zusammensetzung des Prozessgases, dem Saugdruck, dem Enddruck, usw. Ferner ist der Innendurchmesser bzw. der Außendurchmesser des Rotorrings bzw. des Statorrings von dem Außendurchmesser der Welle vorgegeben, der ebenfalls konstruktiv bedingt vorgegeben ist. Die Drehzahl der Welle und der Außen- bzw. Innendurchmesser des Rotorrings bzw. des Statorrings bedingen zusammen mit der Breite des Spalts die in dem Spalt herrschenden Geschwindigkeitsgradienten in der Sperrgasströmung. Je höher die Geschwindigkeitsgradienten sind, desto stärker sind die Reibungseffekte in dem Sperrgas und desto stärker erwärmt sich das Sperrgas in dem Spalt und den rotierenden Oberflächen auf.

Um die Betriebsicherheit der gasgeschmierten Gleitringdichtung sicherzustellen, ist unter der Maßgabe der Unterschreitung einer maximal zulässigen Betriebstemperatur des Rotorrings und des Statorrings die Breite des Spalts entsprechend festzulegen.

Besteht die Gefahr, dass beim Betrieb der gasgeschmierten Gleitringdichtung die maximal zulässige Betriebstemperatur des Rotorrings und des Statorrings überschritten wird, so ist der Spalt zwischen dem Rotorring und dem Statorring mit einer entsprechend großen Breite vorzusehen. Dies hat jedoch den Nachteil, dass eine große Breite des Spalts zu einer hohen Leckagerate der gasgeschmierten Gleitringdichtung führt.

Ein herkömmlicher Prozessgasturboverdichter hat beispielsweise einen Saugdruck von 300 bar. Dieser hohe Saugdruck hat zur Folge, dass das Prozessgas an der Saugseite des Prozessgasturboverdichters eine hohe Dichte hat, wodurch das Sperrgas in dem Spalt sich stark erwärmt. Eine theoretisch minimale Breite des Spalts, bei dem gerade das Abheben des Rotorrings von dem Statorrings im Betrieb sichergestellt ist, wäre hinsichtlich der Betriebssicherheit für die gasgeschmierte Gleitringdichtung zu klein, da das Sperrgas in dem Spalt sich zu stark erwärmen würde. Dadurch wären die Materialen und Bauteile der gasgeschmierten Gleitringdichtung einer übermäßigen thermischen Belastung ausgesetzt, was zu einem Versagen oder Ausfall der gasgeschmierten Gleitringdichtung führen kann.

Denkbar wäre die Breite des Spalts zu erhöhen, so dass die Wärmeabfuhr von der gasgeschmierten Gleitringdichtung dadurch erhöht ist. Diese Maßnahme würde jedoch zu einer erhöhten Leckagerate der gasgeschmierten Gleitringdichtung führen.

Aufgabe der Erfindung ist es, ein Gehäuse für einen mit einer gasgeschmierten Gleitringdichtung abgedichteten Prozessgasturboverdichter und den Prozessgasturboverdichter mit dem Gehäuse zu schaffen, wobei im Betrieb des Prozessgasturboverdichters die Leckagerate der Gleitringdichtung niedrig ist.

Das erfindungsgemäße Gehäuse für einen Prozessgasturboverdichter weist einen Einbauraum für eine gasgeschmierten Gleitringdichtung, die mit dem Prozessgas als ein Sperrgas betreibbar ist, und eine Kühleinrichtung zum Kühlen des Einbauraums auf, so dass im Betrieb des Prozessgasturboverdichters die Leckagerate der Gleitringdichtung niedrig ist.

Der erfindungsgemäße Prozessgasturboverdichter weist das Gehäuse auf.

Der Prozessgas-Hockdruckverdichter wird mit dem Prozessgas betrieben, das einen hohen Druck und/oder eine hohe Dichte aufweist. Insbesondere ist der Druck des Prozessgases an der Saugseite hoch, so dass das Sperrgas der Gleitringdichtung auch einen hohen Druck aufweist. Dadurch ist die Dichte des Sperrgases hoch, so dass das Sperrgas in der Gleitringdichtung stark erwärmt wird. Die Gleitringdichtung weist einen Rotorring und einen Statorring auf, zwischen denen ein Spalt ausgebildet ist, durch den das Sperrgas strömt. Die Breite des Spalts bestimmt insbesondere den Grad der Erwärmung des Sperrgases in der Gleitringdichtung, wobei bei einem großen Spalt die Erwärmung des Sperrgases geringer ist als bei einem kleinen Spalt. Jedoch steigt die Leckagerate der Gleitringdichtung mit der Größe des Spalts an.

Mit der Kühleinrichtung zum Kühlen des Einbauraums und somit der Gleitringdichtung ist die Gleitringdichtung im Betrieb kühlbar. Dadurch kann eine zu starke Erwärmung der Gleitringdichtung im Betrieb unterbunden werden. Die zu starke Erwärmung kann durch einen übermäßigen Wärmeeintrag in die Gleitringdichtung insbesondere von dessen Sperrgas verursacht werden, das in dem Spalt zwischen dem Rotorring und dem Statorring sich erwärmt. Dadurch, dass mit der Kühleinrichtung die Gleitringdichtung kühlbar ist, kann eine übermäßige Erwärmung des Sperrgases verhindert werden, ohne dass die Gleitringdichtung einer übermäßigen thermischen Belastung ausgesetzt ist. Somit kann der Spalt zwischen dem Statorring und dem Rotorring mit einer geringen Breite vorgesehen sein, so dass die Leckagerate der Gleitringdichtung niedrig ist.

Ferner wird die Kühlung der Gleitringdichtung durch die Kühleinrichtung via den Einbauraum bewerkstelligt. Dadurch braucht vorteilhaft an der Gleitringdichtung keine Maßnahme zur Schaffung der Kühleinrichtung vorgesehen zu werden, wodurch vorteilhaft für die Gleitringdichtung eine handelsübliche Standardgleitringdichtung in den Einbauraum vorgesehen werden kann.

Es ist bevorzugt, dass die Kühleinrichtung einen Kühlkreislauf mit einem Kühlmedium aufweist, mit dem der Einbauraum kühlbar ist.

Dadurch kann vorteilhaft der Kühlkreislauf hinsichtlich seiner Kühlleistung in Bezug auf die Gleitringdichtung gesteuert werden, so dass ein gezieltes Kühlen der Gleitringdichtung ermöglicht ist. Somit kann flexibel auf unterschiedliche Betriebsweisen und -zustände der Gleitringdichtung mittels des Kühlkreislaufs reagiert werden.

Bevorzugt ist es, dass der Kühlkreislauf ein Kanalsystem aufweist, das in dem Gehäuse vorgesehen ist und in dem ein Kühlmedium strömbar ist.

Dadurch kann vorteilhaft ein externer Kühlkreislauf eingerichtet werden, mit dem das Kanalsystem betrieben wird.

Bevorzugt weist das Kanalsystem eine Kühlkammer auf, die in der Nähe des Einbauraums angeordnet ist.

In der Kühlkammer verweilt das Kühlmedium eine gewisse Zeitdauer, so dass die Wärmeübertragung von der Gleitringdichtung zu dem Kühlmedium erhöht ist. Dadurch ist die Kühleffektivität der Kühleinrichtung erhöht.

Es ist bevorzugt, dass der Kühlkreislauf derart eingerichtet ist, dass das Kühlmedium nicht in unmittelbarem Kontakt mit dem Prozessgas kommen kann.

Somit ist eine chemische Reaktivität zwischen dem Kühlmedium und dem Prozessgas unterbunden. Ferner, im Falle, dass das Prozessgas giftig ist, oder nicht an die Atmosphäre gelangen darf, braucht die Kühleinrichtung nicht abgeschirmt betrieben zu werden.

Außerdem ist es bevorzugt, dass die Kühleinrichtung eine Steuereinheit aufweist, mit der das Kühlen des Einbauraums der Gleitringdichtung hinsichtlich einer Minimierung der Leckagerate der Gleitringdichtung steuerbar ist.

Dadurch kann vorteilhaft die Minimierung der Leckagerate der Gleitringdichtung bei unterschiedlichen Betriebszuständen der Gleitringdichtung durch Steuern der Steuereinheit erreicht werden.

Ferner ist es bevorzugt, dass mit der Steuereinheit das Kühlen des Einbauraums der Gleitringdichtung in Abhängigkeit von einem zeitlichen Temperaturgradienten und/oder einem Kondensatanfall in dem Sperrgas steuerbar ist.

Dadurch kann unterbunden werden, dass die Gleitringdichtung einer zu hohen Betriebstemperatur ausgesetzt oder von Kondensatanfall in dem Sperrgas beschädigt wird. Somit ist die Gleitringdichtung sicher auch bei extremen Bedingungen betreibbar.

Bevorzugt ist das Sperrgas saugseitiges Prozessgas des Prozessgas-Hockdruckturboverdichters.

Hat bei beliebigen Ansaugdrücken das Prozessgas eine Eintrittstemperatur von über 200°C, so ist eine Kühlung der Wellenabdichtung notwendig.

Es ist bevorzugt, dass das Gehäuse im Dichtungsbereich ungeteilt ausgeführt ist und analog zu einer geteilten Ausführung der Kühleinrichtung eine ungeteilte Ausführung der Kühleinrichtung nach gleichem Prinzip aufweist.

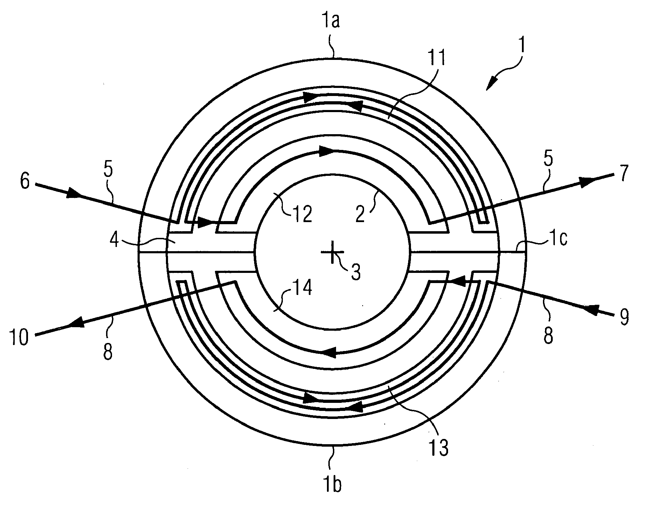

Im Folgenden wird ein bevorzugtes Ausführungsbeispiel des erfindungsgemäßen Gehäuses für einen Prozessgasturboverdichter anhand der beigefügten schematischen Zeichnung erläutert. Es zeigt die Figur einen Aufriss des erfindungsgemäßen Gehäuses im Bereich eines Einbauraums für eine gasgeschmierte Gleitringdichtung.

Wie es aus der Figur ersichtlich ist, weist ein Gehäuse 1 eines Prozessgasturboverdichters eine obere Gehäuseschale 1a und eine untere Gehäuseschale 1b auf. Die obere Gehäuseschale 1a und die untere Gehäuseschale 1b sind aneinandergelegt, so dass das Gehäuse 1 durch eine Teilfuge 1c getrennt ist. In dem Gehäuse 1 ist eine Welle 2 angeordnet, die eine Rotationsachse 3 hat.

In dem Gehäuse 1 zwischen der oberen Gehäuseschale 1a und der unteren Gehäuseschale 1b ist um die Welle 2 symmetrisch zur Rotationsachse 3 angeordnet ein zylindrischer Einbauraum 4 vorgesehen. In den Einbauraum 4 ist eine gasgeschmierte Gleitringdichtung (nicht gezeigt) einbaubar. Mit Hilfe der gasgeschmierten Gleitringdichtung wird das Innere des Gehäuses 1 nach außen zwischen der Welle 2 und dem Gehäuse 1 abgedichtet.

Die obere Gehäuseschale 1a und die untere Gehäuseschale 1b sind jeweils als halbkreisförmige Zylinderschalen ausgebildet, so dass von der oberen Gehäuseschale 1a und der unteren Gehäuseschale 1b der Einbauraum 4 als zylindrisch ringförmig um die Welle 2 gebildet ist.

Beim Montieren der gasgeschmierten Gleitringdichtung wird diese auf die Welle 2 entlang der Rotationsachse 3 gesteckt, so dass die gasgeschmierte Gleitringdichtung in dem Einbauraum 4 angesiedelt ist und sowohl von der oberen Gehäuseschale 1a und der unteren Gehäuseschale 1b umgeben wird.

In der oberen Gehäuseschale 1a ist ein oberes Kanalsystem 5 vorgesehen, das einen Eintritt 6 und einen Austritt 7 hat. In der unteren Gehäuseschale 1b ist ein unteres Kanalsystem 8 vorgesehen, das einen Eintritt 9 und einen Austritt 10 hat. Das obere Kanalsystem 5 ist derart ausgebildet, dass ein Kühlmedium (in der Figur mit Pfeilen angedeutet) von dem Eintritt 6 zu dem Austritt 7 strömen kann. Ferner ist das untere Kanalsystem 8 derart eingerichtet, dass das Kühlmedium (in der Figur mit Pfeilen angedeutet) von dem Eintritt 9 zu dem Austritt 10 strömen kann.

Außerdem weist das obere Kanalsystem 5 eine obere außen liegende Kühlkammer 11 und eine obere innen liegende Kühlkammer 12 auf. In analoger Weise weist das untere Kanalsystem 8 eine untere außen liegende Kühlkammer 13 und eine untere innen liegende Kühlkammer 14 auf. Sowohl die obere außen liegende Kühlkammer 11 als auch die untere außen liegende Kühlkammer 13 sind am Außendurchmesser des Einbauraums 4 angesiedelt, wohin gegen die obere innen liegende Kühlkammer 12 und die untere innen liegende Kühlkammer 14 am Innendurchmesser des Einbauraums 4, d.h. an der Welle 2, angesiedelt sind. Die Kühlkammern 11 und 12 sind in dem oberen Kanalsystem 5 derart integriert, dass sie von dem Kühlmedium durchströmt werden können. Ferner sind die Kühlkammern 13 und 14 in das untere Kanalsystem 8 derart integriert, dass sie von dem Kühlmedium durchströmt werden können.

Das obere Kanalsystem 5 ist vollständig in die obere Gehäuseschale 1a integriert, und das untere Kanalsystem 8 ist vollständig in die untere Gehäuseschale 1b integriert. Dadurch kann das Gehäuse 1 an der Teilfuge 1c geteilt werden, ohne dass sowohl das obere Kanalsystem 5 als auch das untere Kanalsystem 8 an der Teilfuge 1c geöffnet werden. Ferner braucht an der Teilfuge 1c keine Maßnahme zum Abdichten der Kanalsysteme 5, 8 vorgesehen zu werden.

Die Kanalsysteme 5 und 8 sind derart gestaltet, dass das Kühlmedium die Kühlkammern 11 bis 14 mäanderförmig durchströmt. Dadurch wird die Kühleffektivität der Kanalsysteme 5 und 8 erhöht.

Ist die gasgeschmierte Gleitringdichtung in den Einbauraum 4 eingebaut, so ist die Gleitringdichtung von den Kanalsystemen 5 und 8 mit ihren Kühlkammern 11 bis 14 umgeben, so dass bei Durchströmung der Kühlsysteme 5 und 8 mit dem Kühlmedium die Gleitringdichtung von den Kanalsystemen 5, 8 gekühlt wird.

Das Gehäuse kann auch als einteiliges Gehäuse ausgeführt sein. In diesem Fall hätte das Kühlsystem nur einen Eintritt und einen Austritt.

## Patentansprüche

1. Gehäuse (1) für einen Prozessgasturboverdichter,
mit einem Einbauraum (4) für eine gasgeschmierte Gleitringdichtung, die mit dem Prozessgas als ein Sperrgas betreibbar ist,
und einer Kühleinrichtung (5 - 14) zum Kühlen des Einbauraums (4), so
dass im Betrieb des Prozessgasturboverdichters die Verlustleistung der Gleitringdichtung abgeführt werden kann und die Leckagerate niedrig ist.

2. Gehäuse gemäß Anspruch 1,
wobei die Kühleinrichtung einen Kühlkreislauf (5 - 14) aufweist, mit dem der Einbauraum (4) kühlbar ist.

3. Gehäuse gemäß Anspruch 2,
wobei der Kühlkreislauf ein Kanalsystem (5, 8) aufweist, das in dem Gehäuse (1) vorgesehen ist und in dem ein Kühlmedium strömbar ist.

4. Gehäuse gemäß Anspruch 3,
wobei das Kanalsystem (5, 8) eine Kühlkammer (11 - 14) aufweist, die in der Nähe des Einbauraums (4) angeordnet ist.

5. Gehäuse gemäß Anspruch 2 oder 3,
wobei der Kühlkreislauf (5, 8) derart eingerichtet ist, dass das Kühlmedium nicht in unmittelbarem Kontakt mit dem Prozessgas kommen kann.

6. Gehäuse gemäß einem der Ansprüche 1 bis 5,
wobei die Kühleinrichtung (5 - 14) eine Steuereinheit aufweist, mit der das Kühlen des Einbauraums (4) der Gleitringdichtung hinsichtlich einer Minimierung der Leckagerate der Gleitringdichtung steuerbar ist.

7. Gehäuse gemäß Anspruch 6,
wobei mit der Steuereinheit das Kühlen des Einbauraums (4) der Gleitringdichtung in Abhängigkeit eines zeitlichen Temperaturgradienten und/oder eines Kondensatanfalls in dem Sperrgas steuerbar ist.

8. Prozessgasturboverdichter mit einem Gehäuse (1) gemäß einem der Ansprüche 1 bis 7.

9. Prozessgasturboverdichter gemäß Anspruch 9,
wobei das Sperrgas saugseitiges Prozessgas ist.

10. Prozessgasturboverdichter gemäß Anspruch 9 oder 10, wobei das Gehäuse (1) im Dichtungsbereich ungeteilt ausgeführt ist und analog zu einer geteilten Ausführung der Kühleinrichtung (5 - 14) eine ungeteilte Ausführung der Kühleinrichtung (5 - 14) nach gleichem Prinzip aufweist.
